# EUROPEAN PATENT APPLICATION

(11) **EP 1 310 877 A2**
(43) Date of publication of application: **14.05.2003**
(21) Application number: 02024613.8
(22) Date of filing: 04.11.2002
(51) Int. Cl.: G06F 11/32, G06F 11/22, G06F 9/44, G06F 3/023

(54) **Graphical depiction display to assist product assembly**

(30) Priority: 13.11.2001 US 14308
(71) Applicant: Gateway, Inc., North Sioux City, South Dakota 57049 (US)
(72) Inventor: Leapman, Scott D., Sioux City, IA 51104 (US)
(74) Representative: Viering, Jentschura & Partner

(57) **Abstract**

The present invention is an apparatus and method of displaying a graphical depiction on a display device to assist a user in the assembly and use of a product The apparatus may detect a fault condition and correspondingly provide a graphical depiction of a method for correcting the fault condition. An apparatus of the present invention may also provide a graphical depiction of a procedure to enhance utility of a product and to activate a function of the apparatus.

## Description

### FIELD OF THE INVENTION

The present invention relates generally to the field of instruction delivery and more particularly to an apparatus and method for providing a graphical depiction on a display for enhanced instruction delivery.

### BACKGROUND OF THE INVENTION

Electronic products typically are accompanied by fault conditions. Further, electronic products typically require a user to perform a series of steps in order to activate a function of the product. For example, in the assembly of a personal computer, one connects a mouse, a keyboard, and a monitor with a central processing unit of the personal computer. If a monitor does not detect a video signal, it may produce a textual description that a signal is not present and connections should be checked. This may not provide enough information for a user to properly assemble a personal computer.

When a user purchases a product which requires installation, the product may be accompanied with a user's manual providing instructions to allow proper installation. Typically, user's manuals may include pictures and diagrams to assist the user in understanding the written instructions to provide a better understanding of the assembly. As products have become more technical and complex in their installation and application, it has become increasingly difficult for consumers to assemble and utilize products. However, electronic products do not provide illustrations to enhance the understanding of a user to correct a fault condition or activate a function of the products. Therefore, it would be desirable to provide an apparatus and method for providing a graphical depiction on a device to assist a user in the assembly and use of a product.

### SUMMARY OF THE INVENTION

Accordingly, the present invention is directed to an apparatus and method of displaying a graphical depiction on a display device to assist a user in the assembly of a product. In one embodiment of the invention, the apparatus and method of the present invention detects fault conditions and correspondingly provides a graphical depiction of a method for correcting the fault conditions. In another embodiment of the invention, the apparatus and method provides a graphical depiction of a procedure to activate a particular function and enhance the utility of a product.

It is to be understood that both the foregoing general description and the following detailed description are exemplary and explanatory only and are not restrictive of the invention as claimed. The accompanying drawings, which are incorporated in and constitute a part of the specification, illustrate an embodiment of the invention and together with the general description, serve to explain the principles of the invention.

### BRIEF DESCRIPTION OF THE DRAWINGS

The numerous advantages of the present invention may be better understood by those skilled in the art by reference to the accompanying figures in which:
FIG. 1 depicts a process of providing a graphical depiction for correcting a detected fault in accordance with one embodiment of the present invention;
FIG. 2 depicts an embodiment of a process of providing a graphical depiction of a procedure to activate a desired function of an apparatus of the present invention;
FIG. 3 depicts an embodiment of an apparatus of the present invention;
FIG. 4 depicts an embodiment of a graphical depiction for aiding a user in the correction of a fault condition in accordance with the present invention; and
FIG. 5 depicts an embodiment of a graphical depiction of a procedure a user must perform to activate a desired function of an apparatus.

### DETAILED DESCRIPTION OF THE INVENTION

Reference will now be made to presently preferred embodiments of the invention, examples of which are illustrated in the accompanying drawings.

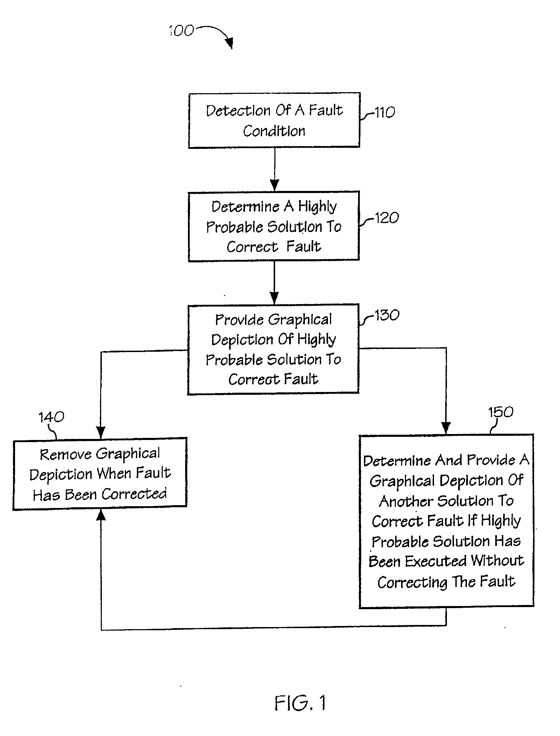

Referring to FIG. 1, a process 100 of providing a graphical depiction for correcting a detected fault in accordance with one embodiment of the present invention is shown. Process 100 may begin as an apparatus of the present invention detects a fault condition 110. In one embodiment of the invention, a fault condition refers to an operating condition which leads a device to failure or inefficiency. In an alternative embodiment of the invention, a fault condition may refer to an incorrect assembly or use of a product. A fault condition may include but is not limited to a lack of connectivity with another apparatus, an improper connection, a partial connection, lack of an alternating current (AC) electrical source, and low battery power. In one embodiment of the invention, apparatus determines a fault condition by an absence of a signal. When an apparatus detects a fault condition 110, apparatus may automatically determine a highly probable solution to correct the fault condition 120. It should be understood by one of ordinary skill in the art that the detection of a lack of connectivity, improper connection, partial connection, low battery power, and lack of an AC source is well known. Further, other types of fault conditions and fault detection may be utilized by one of ordinary skill in the art without departing from the scope and spirit of the present invention. Depending upon the type of fault condition, there may be multiple ways of correcting the fault, however, a highly probable solution to correct the fault is provided 130. In an alternative embodiment, a graphical depiction of all possible solutions to correct a fault are provided by the apparatus. The graphical depiction may include color to enhance a user's ability to under the solution. A graphical depiction may be a pictographical depiction in one embodiment of the invention. In an alternative embodiment, graphical depiction is an iconographical depiction.

When a fault has been corrected, the graphical depiction for correcting the fault is removed 140. If a highly probable solution is performed by a user without correcting the fault, a graphical depiction of another solution is determined and provided 150. Step 150 may continue to a third and additional solutions as each is performed by a user without correcting the fault. Once the fault has been corrected, the graphical depiction is removed 140.

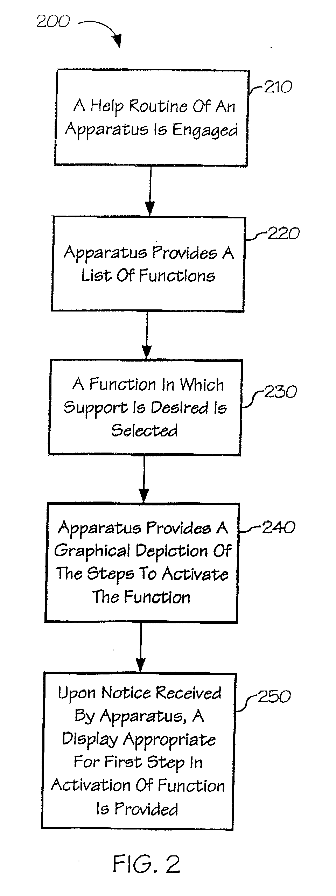

Referring now to FIG. 2, an embodiment of a process 200 of providing a graphical depiction of a procedure to activate a desired function of an apparatus of the present invention is shown. Electronic products typically allow certain assembly procedures and provide options for enhanced functionality to users. For example, a cellular telephone may provide a frequent call list. However, it may not be apparent to a user how to setup a frequent call list. In one embodiment of the invention, process 200 provides a method for displaying a graphical depiction of the steps a user must perform to activate a particular function, such as a frequent call list.

Process 200 may begin as a help routine on an apparatus of the present invention is engaged 210. When a help routine is activated, an apparatus of the present invention provides a list of functions 220. The list of functions includes optional features of the apparatus which may be activated and utilized by a user. A function in which support is desired is selected by a user and received by the apparatus 230. The apparatus provides a graphical depiction of the steps to activate the desired function 240. The graphical depiction may include a non-textual description of the method for activating the step. After a user has reviewed the graphical depiction, a user may alert the apparatus and be directed to the first step in the activation of the function 250.

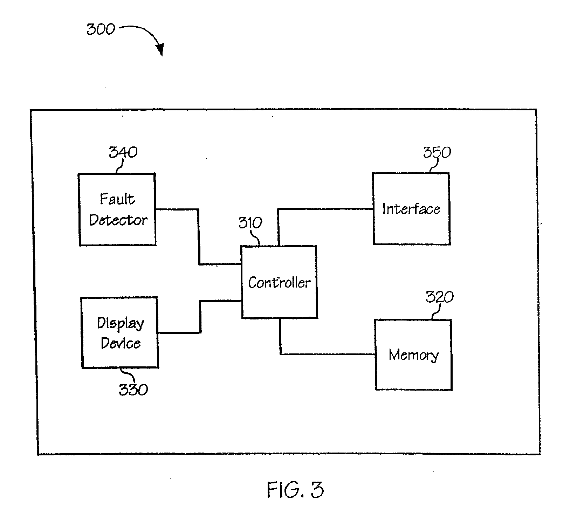

Referring now to FIG. 3, an embodiment of an apparatus 300 of the present invention is shown. In one embodiment of the invention, apparatus 300 is capable of executing process 100 and 200 of FIGS. 1 and 2. Process 100 and 200, in one embodiment of the invention, is implemented by the execution of a program of instructions. For example, a program of instructions represents and executes steps of process 100 and 200 to provide a graphical depiction. The program of instructions may be stored in memory 320 of apparatus 300 and is executed by a controller 310 incorporated within an apparatus 300 of the present invention.

Controller 310 includes a central processing unit such as a microprocessor or microcontroller for executing programs, performing data manipulations and controlling the tasks of apparatus 300. Memory 320 may include semiconductor-based memory such as read-only memory (ROM), programmable read-only memory (PROM) erasable programmable read-only memory (EPROM), electrically erasable read-only memory (EEPROM), or flash memory (block oriented memory similar to EEPROM).

Apparatus 300 may include a housing. Within a housing, apparatus 300 may includes a display system and display device 340 for .presenting the graphical depiction. For example, display system 330 may comprise a video display adapter having all of the devices for driving the display device 340 including video random access memory (VRAM), buffer, and graphics engine as desired. A display device 340 may comprise a liquid-crystal display (LCD), or may comprise alternative display technologies, such as a light-emitting diode (LED) display, gas or plasma display. Examples of apparatus 300 may include but are not limited to cellular telephones, remote control devices, personal digital assistants, monitors, televisions, computers, digital storage medium players such as MP3 players, CD players, DVD players, network devices and the like.

Apparatus 300 further includes a fault detector 340 and interface 350. In one embodiment of the invention, fault detector 340 is capable of determining the presence of a fault condition. Fault detector 340 may not comprise a specific component or collection of components, rather it may represent a functionality of apparatus 300 in an embodiment of the invention. In one embodiment of the invention, apparatus 300 includes a connector disposed on a housing of apparatus 300. Fault detector 340 determines whether a proper connection is made with a connector disposed on a housing. Interface 350 allows for input of a user's selections. For example, a user is capable of opening a help routine, selecting a function, and delivering a notice that a depiction is understood by input through interface 350. As described in FIG. 2, upon notice received by apparatus, a display appropriate for the first step in an activation of a function is provided.

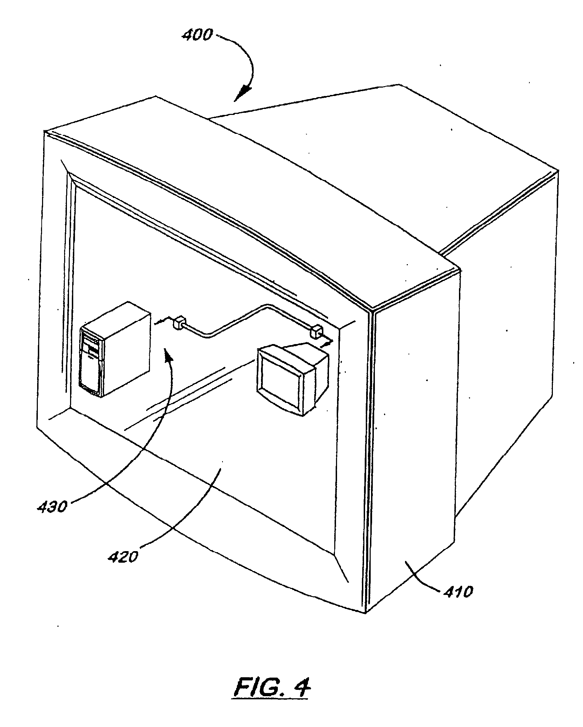

Referring to FIG. 4, an embodiment of a graphical depiction 400 for aiding a user in the correction of a fault in accordance with the present invention is shown. A monitor 410 for use as a display for a personal computer is capable of detecting the presence of a fault condition, such as a lack of a video signal connection. In one embodiment of the invention, monitor 410 includes components of apparatus 300 of FIG. 3 including a display device 420 and is capable of executing process 100 and 200 of FIGS. 1 and 2.

In the example of FIG. 4, monitor 410 determines a video signal is not detected. This is an example of a fault condition. Monitor 410 determines that the most probable solution is that the monitor cable between the monitor and central processing unit of the personal computer has not been properly connected. Thus a graphical depiction 430 is provided which shows that the monitor cable should be connected to a connector of the monitor and the central processing unit. Graphical depiction 430 may include color to enhance a user's understanding. In one embodiment, graphical depiction includes a color coded monitor cable being plugged into a color coded connector of the monitor. Further, in one embodiment of the invention, graphical depiction 430 is a static depiction, and in an alternative embodiment, graphical depiction 430 is an animated depiction. For example, graphical depiction 430 could include a cable, the cable including a red connector at each end of the cable. The depiction may also include animation of the movement of a red connector of the cable into a red connector of the monitor. This would be advantageous as a user could decipher that the cable is not properly connected to the monitor and could fix the fault condition by placing the red connector of the cable into the red connector of the monitor. In one embodiment of the invention, a message indicating that a proper connection is made with a connector of monitor 410 is presented on the display of the monitor 410 when the monitor 410 detects that a proper connection has been established.

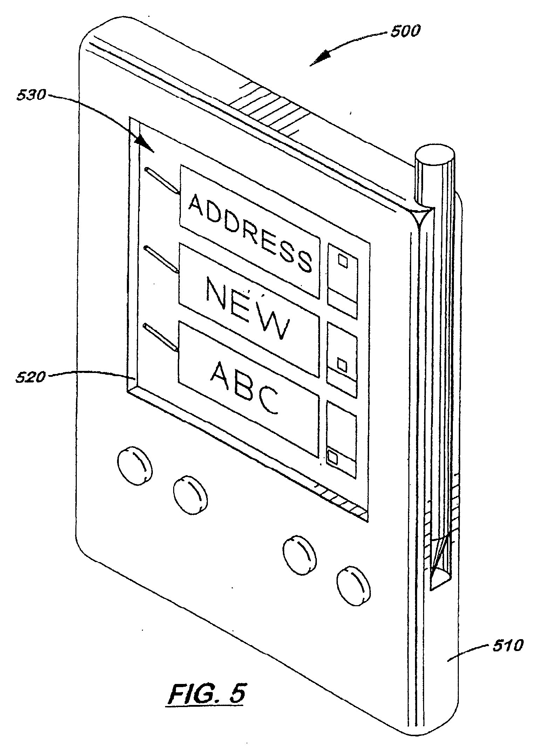

Referring now to FIG. 5, an embodiment of a graphical depiction of a procedure 500 a user must perform to activate a desired function is shown. A personal digital assistant 510 is an example of an apparatus 300 of FIG. 3. Personal digital assistant is capable of performing processes 100 and 200 of FIGS. 1 and 2. A function which a personal digital assistant 510 performs is the storage of address information. However, a user may not know how to implement this function. A help routine may be engaged by a user in which an address function is selected. A screen 520 of personal digital assistant 510 displays a graphical depiction 530 of the steps involved in entering an address. The depiction may include the icons that are engaged by a stylus along with an approximate position of the icon on the screen 520. In alternative embodiments of the invention, graphical depiction 530 may be a static depiction or an animated depiction. Further, graphic depiction is in color to enhance the user's ability to understand the instructions in an embodiment of the invention.

It should be understood that the examples of FIGS. 4 and 5 are exemplary only and one of ordinary skill in the art may provide a graphical depiction to enhance instruction delivery to other types of installations and products without departing from the scope and spirit of the present invention. Implementation of process 100 and 200 is capable of being performed by a multitude of products including a monitor, television, computer, personal digital assistant, cellular telephone, remote control device, digital storage medium player, CD player, DVD player, a network device and other similar devices.

Although the invention has been described with a certain degree of particularity, it should be recognized that elements thereof may be altered by persons skilled in the art without departing from the spirit and scope of the invention. It is believed that the method and system for the present invention and many of its attendant advantages will be understood by the foregoing description, and it will be apparent that various changes may be made in the form, construction, and arrangement of the components thereof without departing from the scope and spirit of the invention or without sacrificing all of its material advantages, the form herein before described being merely an explanatory embodiment thereof. It is the intention of the following claims to encompass and include such changes.

## Claims

1. A method, comprising:
(a) detecting a fault condition;
(b) determining a solution for correcting said fault condition; and
(c) providing a graphical depiction which illustrates said solution to said fault condition; wherein said graphical depiction is displayed on a display device.

2. The method as claimed in claim 1, wherein said fault condition is at least one of lack of connectivity, lack of an alternating current electrical source, and low battery power.

3. The method as claimed in claim 2, wherein said fault condition is detected by an absence of a signal.

4. The method as claimed in claim 1, further comprising removing said graphical depiction from said display device when said fault condition has been corrected.

5. The method as claimed in claim 1, wherein said graphical depiction is at least one of a static depiction and an animated depiction.

6. The method as claimed in claim 1, wherein said fault condition is a lack of a video signal received by a monitor of a personal computer.

7. The method as claimed in claim 1, wherein graphical depiction includes a color coded monitor cable being plugged into a color coded connector.

8. A method, comprising:
(a) providing a help routine; said help routine including a list of functions an apparatus is capable of performing;
(b) receiving a selection of a particular function; and
(c) displaying a graphical depiction of at least one step for activating said particular function on a display device of said apparatus.

9. The method as claimed in claim 8, further comprising providing a display suitable for a user to perform a first step in activating said particular function.

10. The method as claimed in claim 8, wherein said graphical depiction is at least one of a static depiction and an animated depiction.

11. The method as claimed in claim 8, wherein said graphical depiction is in color.

12. The method as claimed in claim 8, wherein said apparatus is at least one of a cellular telephone, a personal digital assistant, a monitor, television, a remote control, a computer, a CD player, a DVD player, a digital storage medium player and a network device.

13. An apparatus, comprising:
(a) means for determining if an instruction is necessary;
(b) a controller coupled to said determining means;
(c) a memory coupled to said controller; and
(d) a display device coupled to said controller, wherein upon a determination if said instruction is necessary, said controller determines an appropriate graphical depiction to aid a user which is displayed on said display device.

14. The apparatus as claimed in claim 13, wherein said determining means is capable of detecting a fault condition.

15. The apparatus as claimed in claim 13, wherein said determining means includes an interface capable of receiving an input from a user that instruction is necessary regarding activating a function of said apparatus.

16. The apparatus as claimed in claim 14, wherein said determining means detects said fault condition by an absence of a signal.

17. The apparatus as claimed in claim 13, wherein said graphical depiction is at least one of a static depiction and an animated depiction.

18. The apparatus as claimed in claim 13, wherein said graphical depiction is in color.

19. The apparatus as claimed in claim 13, wherein said apparatus is at least one of a cellular telephone, a personal digital assistant, a monitor, a computer, a television, a remote control, a CD player, a DVD player, a digital storage medium player and a network device.

20. An apparatus, comprising:
(a) a housing including a display disposed within said housing;
(b) a connector disposed on said housing;
(c) means for detecting whether a proper connection is not made with said connector; and
(d) means for displaying on the display a pictographical solution for providing a proper connection with said connector in the event that said detecting means detects that a proper connection is not made with said connector.

21. An apparatus as claimed in claim 20, said means for displaying being capable of displaying a graphical depiction of the solution on the display.

22. An apparatus as claimed in claim 20, said means for displaying being capable of displaying an animated graphical depiction of the solution on the display.

23. An apparatus as claimed in claim 20, said housing including a display being at least one device selected from the group comprising: a monitor, a television, a computer, a personal digital assistant, a DVD player, a CD player, a digital storage medium player, and a network device.

24. An apparatus as claimed in claim 20, said means for displaying being disposed within said housing along with the display.

25. An apparatus as claimed in claim 20, said means for displaying further displaying a message indicating that a proper connection is made with said connector when said detecting means detects that a proper connection is made with said connector.

26. An apparatus, comprising:
(a) a housing including a display within said housing,
(b) a connector disposed on said housing;
(c) means for detecting whether a proper connection is not made with said connector; and
(d) means for displaying on the display an iconographical depiction for a user a solution with which the user can cause a proper connection to be made with said connector.

27. An apparatus as claimed in claim 26, said means for displaying further displaying a message indicating that a proper connection is made with said connector when said detecting means detects that a proper connection is made with said connector.
